# EUROPEAN PATENT SPECIFICATION

(11) **EP 3 877 132 B1**
(45) Date of publication and mention of the grant of the patent: **26.07.2023**
(21) Application number: 19797727.5
(22) Date of filing: 05.11.2019
(51) Int. Cl.: B29C 39/02, B29C 39/24, B29C 39/44, B29C 39/00, B29K 75/00

(54) **METHOD AND SYSTEM FOR MANUAL CASTING OF POLYMERS**
VERFAHREN UND SYSTEM ZUM MANUELLEN GIESSEN VON POLYMEREN
PROCÉDÉ ET SYSTÈME DE COULÉE MANUELLE DE POLYMÈRES

(30) Priority: 06.11.2018 WO PCT/CN2018/114198; 12.12.2018 EP 18211982
(43) Date of publication of application: 15.09.2021
(73) Proprietor: Covestro Intellectual Property GmbH & Co. KG, 51373 Leverkusen (DE)
(72) Inventor: RODRIGUES, Jean, Paul, 26120 MONTELIER (FR); GUO, Ruijing, Shanghai, 201208 (CN); GAO, Sean, Shanghai 201208 (CN); JEANTIN, Philippe, 26300 Alixan (FR); MALEIKA, Robert, 40589 Düsseldorf (DE)
(74) Representative: Levpat
(86) International application number: PCT/EP2019/080159
(87) International publication number: WO 2020/094599

(56) References cited:
- WO-A1-2007/122019
- WO-A2-2018/128710
- JP-A- H0 491 913
- PHILIPS H: "The science of vacuum-casting high-voltage ignition coils", ELECTRICAL INSULATION CONFERENCE AND ELECTRICAL MANUFACTURING & COIL W INDING CONFERENCE, 1999. PROCEEDINGS CINCINNATI, OH, USA 26-28 OCT. 1999, PISCATAWAY, NJ, USA,IEEE, US, 26 October 1999 (1999-10-26), pages 281-287, XP010372246, DOI: 10.1109/EEIC.1999.826222 ISBN: 978-0-7803-5757-0
- Michael Legault: "In-mold sensors: In-situ process monitoring for RTM : CompositesWorld", , 3 August 2015 (2015-08-03), pages 1-5, XP055668433, Retrieved from the Internet: URL:https://www.compositesworld.com/articl es/in-mold-sensors-in-situ-process-monitor ing-for-rtm [retrieved on 2020-02-13]
- Sara Black: "Automation In The Cast Polymer Industry : CompositesWorld", Composites World, 1 August 2006 (2006-08-01), pages 1-9, XP055668319, Retrieved from the Internet: URL:https://www.compositesworld.com/articl es/automation-in-the-cast-polymer-industry [retrieved on 2020-02-13]

## Description

The invention relates to a method for manual casting of polymers, in particular of manual casting of polyurethanes, wherein a molded part is produced, wherein production of the molded part comprises the steps of preparing a liquid polymer according to a recipe, manual casting of the liquid polymer into a mold with a cavity, and solidifying of the liquid polymer in the mold resulting in the molded part.

Such a method is known, for example, from DE 699 02 522 T2 which relates to a process for making clear polyurethane/urea elastomers. A user heats a prepolymer and degasses it under vacuum. A chain extender is added by using a weighing scale for obtaining the desired mixing ratio and the resulting mixture is stirred. The user finally casts the mixture into a mold for curing. Typical applications of these molded parts are various types of rollers or protective cover plates for exposed surfaces. An example of exposed surfaces are certain apparatuses in mining industry which have to withstand falling stone lumps. The method of manual casting is, of course, only reasonable in case of small series.

It was however found that the properties of the molded parts vary in such a way that some of the molded parts do not comply with certain quality criteria. This might be an insufficient crosslinking density resulting in poorer mechanical properties like lower abrasive wear resistance. This defect might cause molded parts which can only be used for days or weeks instead of years. Another typical problem is formation of bubbles which easily renders a molded part unusable.

Methods according to the preamble of claim 1 and systems according to the preamble of claim 10 are known from WO 2007/122019 A1 and PHILIPS H: "The science of vacuum-casting high-voltage ignition coils", ELECTRICAL INSULATION CONFERENCE AND ELECTRICAL MANUFACTURING & COIL WINDING, CONFERENCE PROCEEDINGS CINCINNATI, 26 October 1999, pages 281-287, DOI: 10.1109/EEIC.1999.826222, ISBN: 978-0-7803-5757-0.

It is therefore an object of the invention to provide a method for manual casting of polymers, in particular of polyurethanes, which increases consistency of at least one material property of molded parts in order to ensure a constant, high quality of the molded parts. It is in particular an object of the invention to provide molded parts with a high mechanical performance, preferentially with a consistent, high abrasive wear resistance and/or molded parts with only few or even without any bubbles.

For achieving this object, the invention teaches a method for manual casting of polymers as defined in claim 1.

The invention is based on the finding that even small changes of parameters, in particular of humidity and/or temperature as well as of certain mixing ratios or raw material parameters, can have a significant impact on the quality of molded parts. In order to avoid molded parts with low quality, these small changes of parameters require a calculation/recalculation of the recipe which makes the production of molded parts very difficult and thus increases work during the production process. By providing a sensor for detecting a parameter, by adapting the recipe according to the detected parameter data and by showing the adapted recipe on the display during the production of the molded part, the user manually casting the liquid polymer into the cavity of the mold can focus on the physical work while the electronic device/system takes over at least a part of the calculation work. Any recalculation/adaption of the recipe may thus be implemented by the user such that the quality of the molded parts increases. Accordingly, the method provides a possibility to effectively react on certain production conditions and to eliminate production errors. The above-mentioned object is thus achieved.

The term "recipe" preferably means a set of formulation data, in particular including the composition/amount of raw materials to be used, and/or at least one production parameter. It is preferred that the recipe comprises at least one treatment instruction concerning raw material/materials and/or components and/or subcomponents and/or the liquid polymer. A treatment instruction is, for example, an instruction that the user now has to degas the liquid polymer and which production parameters of this treatment instruction have to be considered.

The expression "preparing a liquid polymer" preferably means the whole preparation including the substeps of choosing a mold and/or identifying the raw materials and/or weighing out and/or mixing and/or stirring and/or degassing. It is advantageous that the production of the molded part comprises a boxed production section and an unboxed production section. The boxed production section preferably comprises the steps/substeps of choosing a mold and/or identifying the raw materials. The unboxed production section can comprise the steps/substeps of weighing out and/or mixing and/or stirring and/or degassing and/or casting and/or curing.

The term "manual casting" preferably means that the user uses a pot/receptacle/vessel/bin and controls pouring of the liquid polymer into the mold with his hand. It is preferred that the user holds the pot/receptacle/vessel/ bin with his hand while pouring the liquid polymer into the mold. The user preferentially controls pouring of the liquid polymer without a powered dosing apparatus. According to a preferred embodiment, the system comprises a plurality of sensors, wherein it is advantageous that the plurality of sensors comprises the at least one sensor. The plurality of sensors advantageously comprises an ambient sensor for detecting ambient parameters like room temperature and/or humidity and/or atmospheric pressure and/or a time measuring device for measuring the time needed for a production step/substep and/or an identification sensor for identifying a certain raw material and/or a weight sensor for weighing a certain raw material and/or a stirring sensor for detecting a parameter during stirring and/or a vacuum sensor for detecting pressure within a degassing apparatus and/or a gas analyzer for analyzing waste gas during casting. It is preferred that the at least one sensor and/or some or all of the plurality of sensors is coupled to a time measuring device.

The expression "production parameter" preferably means a parameter which can be controlled within laboratory in order to achieve an impact onto the molded part. The word "laboratory" preferentially means all kinds of laboratories or production facilities where manual casting takes place or can take place. Examples of the production parameter are stirring power/energy and/or degassing pressure and/or curing temperature. It is very preferred that the production parameter is a time span of a production step/substep. It is very advantageous that the at least one setpoint of production parameter is shown on the display.

The term "electronic device" preferentially means a smartphone, a personal computer, a server, a tablet, smartglasses, or a laptop. This expression also comprises certain combinations of said devices like a server and a personal computer or a server and a smartphone. The term "display" in particular means a display of a mobile electronic device and especially a touchscreen. The electronic device advantageously is a mobile electronic device, wherein it is preferred that the display is part of the electronic device. The term "display" might also refer to a computer monitor which can be, for example, a liquid-crystal display.

The expression "calculating" especially means that the recipe is computed by means of a formula/algorithm or a table look-up or a combination of both. The system preferably comprises a server, wherein further preferably the electronic device is connected with the server. The server in particular has a processing unit and/or a data base.

The electronic device is preferably connected with the internet and preferably requests online weather data. It is in particular within the scope of the invention that the electronic device comprises a global positioning system (GPS) receiver. It is preferred that the electronic device determines its position via the GPS receiver and then requests online weather data for an area of the determined position.

According to a very preferred embodiment, a first component is mixed with a second component resulting in the liquid polymer. It is advisable that the first and/or the second component is weighed out. It is convenient that then mixing of the first and second component takes places according to a mixing ratio. It is possible that a third component is added to a first and/or a second component. The third component can be an additive, for example a catalyst, a pigment, a plasticizer or a flame resistant material. It is preferred that the first component comprises a prepolymer. Advantageously, the first component/prepolymer comprises a first subcomponent and a second subcomponent. According to an advantageous embodiment, the second subcomponent is poured into the first subcomponent or vice versa, wherein preferably weighing continuously takes place until a mixture with a certain mixing ratio is achieved. It is preferred that the mixture is then stirred. The first subcomponent is preferably an organic diisocyanate, preferably an aromatic, aliphatic, heterocyclic or cycloaliphatic diisocyanate or a mixture thereof. Examples are 1,6-hexamethylene diisocyanate or isophorone diisocyanate. Further examples are highlighted within the WO 2017/186862 A1. According to an advantageous embodiment, the second subcomponent comprises a polyol and in particular a polyether diol a polycaprolactane diol or mixtures thereof. It is also possible to use a polyether polyol, a polyester polyol or polycaprolactone polyol with a functionality > 2 as well as mixtures thereof. Examples of a polyester diol are Ethanediol polyadipate, 1,4-butanediol polyadipate or polycaprolactones. Further examples are mentioned in WO 2017/186862 A1. It is within the scope of the invention that the second component comprises a chain extender and in particular diols and/or diamines or mixtures thereof with a molecular weight between 60 and 3000 g/mol. The second component advantageously comprises aliphatic diols with 2 to 14 carbon atoms, for example 1,2-propanediol, 1,3-propanediol, 1,4-butanediol, or 1,6-hexanediol. Further examples are mentioned in WO 2017/186862 A1. It is preferred that the first component is poured into the second component or vice versa, wherein weighing preferably takes place continuously until a mixture with a certain mixing ratio is achieved. It is preferred that the mixture is stirred after achieving the mixing ratio.

It is very advantageous that the molded part/liquid polymer comprisespolyurethane and/or polyurea and/or their respective raw materials. Preferentially, the molded part comprises a polyurethane elastomer and/or a polyurea elastomer. The production of polyurethane is more critical than many other materials like, for example, epoxy resins. In particular, the mixing ratio of the first and second subcomponent is critical since already a deviation from an ideal value of a few percentage points can cause drastic differences in certain material properties like abrasive wear resistance. It is preferred that the polymer/polyurethane has a tensile stress at yield according to DIN 53504 of at least 10 MPa, preferentially of at least 20 MPa and very preferentially of at least 30 MPa. The polymer preferably has a density of at least 500, further preferably of at least 950 and very preferably of at least 1100 kg/m³. It is within the scope of the invention that the polymer has a density of at most 1800, preferentially of at most 1500 and very preferentially of at most 1300 kg/m³.

It is very advantageous that the system calculates a forecast of at least one material property of the molded part by using the parameter data, wherein the forecast is preferably shown on the display. It is preferred that the forecast is shown on the display during the production of the molded part, preferably before casting and in particular preferably during the same production step/substep in which the system received the parameter data. The system advantageously uses the identification of raw materials and/or ambient data and/or a deviation from a setpoint of a production parameter to forecast, preferably during production / before casting / within the same production step/substep in which the system received the parameter data on which the forecast is based on, a certain material property. The material property is, for example, stress at yield and/or elongation at break and/or rebound resilience and/or density. It is very preferred that the system calculates in case of a deviation from a production parameter a forecast of at least one material property of the molded part and/or the deviation from at least one forecast of a material property of the molded part. According to an advantageous embodiment, the deviation from at least one forecast of material property is shown during production, preferentially before casting and very preferentially during the same production step/substep in which the system received the parameter data on which the forecast is based. Accordingly, the user is in the position to decide during production whether the parameter deviation is critical and whether the production of the molded part should be stopped.

It is very preferred that the method comprises a step of degassing the liquid polymer and/or the first component and/or the second component. The system advantageously has a degassing apparatus. The degassing apparatus preferably comprises an airtight container and advantageously a vacuum pump. The degassing can take place before casting. According to a first embodiment, degassing takes place before the last mixing step. According to a second embodiment, degassing takes place after the last mixing step. It is preferred that a vacuum and/or heat is applied to the liquid polymer. According to a very preferred embodiment, the degassing apparatus comprises a degassing sensor, wherein the degassing sensor is preferentially a pressure sensor.

Advantageously, it can be confirmed manually to the system/electronic device that the production step/substep is completed, whereupon at least a part of the display content changes. It is very preferred that the display can be controlled manually by the user such that the content of the display corresponds to the progress of the production of the molded part. The user can, for example, control the display by touching of the electronic device and/or voice control and/or using a computer keyboard and/or another electronic device that is wirelessly connected to the electronic device, in particular via Bluetooth. It is possible that the user can confirm that he has read the content of the display, whereupon the display content changes, whereupon preferably the display shows the next production step/substep.

According to a very preferred embodiment, the parameter data of the at least one sensor provides an actual value of the parameter, wherein the system generates a signal in case of a deviation of the actual value of the parameter from the setpoint of the parameter. The term "signal" advantageously means that an alert signal is emitted for the user. The alert signal can be, for example, an acoustic and/or visual signal but also an internal signal which does not reach the user and might only trigger further calculation of the system. In the following, the case of a deviation of the actual value of the parameter from the setpoint of the parameter or from a tolerance range around the setpoint of the parameter is called "parameter deviation". According to a very preferred embodiment of the invention, the system forecasts in case of a parameter deviation the deviations of material properties of the molded part. The system advantageously forecasts the deviations of material properties during the production of the molded part wherein it is very preferred that the deviations of material properties are shown on the display.

It is in particular within the scope of the invention that the system saves the parameter data, wherein a report is generated comprising concentrated data of the saved parameter data. The report in particular comprises data concerning the used raw material/materials and/or ambient data and/or pot life and/or weight of used components/subcomponents and/or stirring power and/or stirring time and/or stirred volume and/or degassing time and/or degassing pressure and/or degassing temperature and/or curing time and/or curing temperature. It is very preferred that the report comprises at least one setpoint of a parameter. Advantageously, the report comprises a parameter deviation. It is very preferred that the report includes a forecast of a material property and in particular a forecast of a deviating material property.

It is advisable that the system/the server/the database/the electronic device comprises a data set allocated to the mold. The system preferably comprises a plurality of different molds and a plurality of different according data sets. Advantageously, the system comprises a data set for each mold of the plurality of different molds. It is within the scope of the invention that the/each data set comprises an identifier. The identifier can be a photo and/or a name and/or a number of the molded part/of the mold. According to a very preferred embodiment, the/each data set comprises a volume value of the cavity of the mold. It is very preferred that the user can choose a data set at the beginning of the production of the molded part, for example by scrolling through a menu or by inserting the identifier. Advantageously, the/each data set comprises at least one recommenddation regarding appropriate raw materials for the molded part. According to a preferred embodiment, the system calculates a setpoint of an amount of the raw material/materials after the mold and the raw material/materials have been chosen by the user. The setpoint of the amount of the raw material/materials is preferably given in a weight value/in weight values. In case of at least two raw materials (first and second component/subcomponent), the system preferably calculates the setpoint of amount/weight value of the second component/subcomponent according to a certain mixing ratio. It is preferred that the term "component" or "subcomponent" means a defined amount of raw material.

In a very advantageous embodiment, the at least one sensor is an identification sensor for identification of raw materials. The system preferably comprises an identification sensor for identification of raw materials. The at least one sensor is advantageously an identification sensor for identification of raw materials. The identification sensor can be a manual or an automatic sensor. The manual identification sensor might be an application of the electronic device in which the user can or has to select the used raw material/materials or can or has to insert an identifier, for example a number or a name of the raw material/materials. The automatic identification sensor can be a scanner like a barcode or a quick response (QR) code scanner. It is preferred that a package of the raw material is equipped with a code like a barcode or a QR-code and that the scanner reads the code. It is very preferred that the electronic device is a mobile electronic device comprising the scanner. In another embodiment, the scanner is a camera connected to an optical character recognition (OCR) application. It is also possible that the scanner uses a radio protocol, for example a near field communication (NFC) protocol or a radio-frequency identification (RFID) protocol. In a very preferred embodiment, the code/number allows an identification of a manufacturer/product class/product/lot number. It is very advisable that the system uses the identified raw material/materials for calculation/recalculation of a setpoint of pot life and/or mixing ratio and/or a stirring parameter and/or a degassing parameter and/or a curing parameter.

It is in particular within the scope of the invention that the at least one sensor is a weight sensor providing weight data. Preferably, the system comprises a weight sensor providing weight data. The weight sensor is advantageously a weighing scale. The system advantageously uses the weight data for calculation/recalculation of a subsequent production step/substep. It is preferred that the weight data or a setpoint of amount/weight of the first component/subcomponent is used in combination with a setpoint of a mixing ratio for calculation/recalculation of a setpoint of an amount - preferably expressed as a setpoint of a weight - of the second component/subcomponent. According to a very preferred embodiment, the system calculates a deviation from a setpoint of amount/weight subtracting by an actual value from the setpoint. It is in particular preferred that the deviation from the setpoint of amount is used for a forecast of deviation of material properties, wherein the deviation of material properties is advantageously shown on the display and is in particular shown during production of the molded part. It is very advisable that the system uses the weight data of the first/second component/subcomponent for calculation/recalculation of pot life and/or of starting point of pot life and/or of a stirring method and/or of a stirring time and/or of a stirring power and/or of a curing time and/or of a curing temperature.

It is very advantageous that the system comprises a stirrer and further preferably comprises a stirring sensor. The stirring sensor might be, for example, a wattmeter connected with the stirrer but can also be a part of a digital stirrer providing prepared data like stirred volume per second. It is preferred that the stirring sensor detects starting the sensor and therefore the starting point of the stirring time. It is further advisable that the system calculates a setpoint of the end of the stirring time by adding the starting point of the stirring time and the calculated setpoint of stirring time. The stirring sensor is preferably able to detect an actual value of the time of the end of the stirring step. The system advantageously calculates a deviation between the setpoint of the end of the stirring time and the actual value of the end of the stirring time. It is advisable that the system emits a visual and/or acoustic alert signal, preferably via the electronic device, that the setpoint of the time of the end of the stirring step is reached. According to a very preferred embodiment, the system detects a deviation between the setpoint of the time of the end of the stirring step and the actual value of the time of the end of the stirring step and further preferably shows due to this parameter deviation a forecast of deviating material properties of the molded part on the display. This can be, for example, a caution referring to possible bubbles within the molded part.

It is in particular within the scope of the invention that the at least one sensor is an ambient sensor providing ambient data. Preferably, the system comprises an ambient sensor providing ambient data. The ambient sensor advantageously detects room temperature and/or atmospheric pressure and/or - preferred - humidity. The ambient data is advantageously used for calculation/recalculation of dew point and/or wet-bulb temperature for estimating the percentage of water within the liquid polymer for estimating the percentage of isocyanate reacting with water and not with polyol. The system preferably uses the ambient data for estimation of crosslinking density of the polymer and for forecasting of material properties resulting from crosslinking density. It is very preferred that the forecast of material properties is shown at least in part on the display during the production/the production step/substep. In particular, the ambient data and/or identified raw materials and/or weight data and/or stirring data are used for calculation/recalculation of a setpoint of degassing time and/or of a setpoint of degassing pressure and/or of a setpoint of curing time and/or of a setpoint of curing temperature.

According to an advantageous embodiment, the at least one sensor is a degassing sensor for detecting degassing of the liquid polymer. In one embodiment, the plurality of sensors comprises a degassing sensor for detecting degassing of the liquid polymer. The degassing sensor is preferably a vacuum sensor/pressure sensor. It is preferred that the system comprises a degassing apparatus. The degassing apparatus can have, in particular, an airtight container in which a pot can be placed and preferably can have a vacuum pump for generating a vacuum within the airtight container. The degassing apparatus advantageously comprises the degassing sensor. It is advisable that a degassing sensor is coupled with a/the time measuring device for detecting the degassing time. The time measuring device can be, for example, the electronic device and in particular the mobile electronic device. In a very preferred embodiment, the degassing sensor detects a pressure drop within the airtight container, wherein the system uses the pressure drop as a starting point of the degassing step. It is very advisable that the system uses the starting point of the degassing step together with the calculated degassing time for calculating a setpoint of the end of the degassing step. In an advisable embodiment, the degassing sensor detects an increase in pressure when the vacuum pump is stopped and/or the airtight container is opened. It is in particular favored that the system uses the increase in pressure as an actual value of the end of the degassing step. The system preferentially compares the setpoint of the end of the degassing step with the actual value of the end of the degassing step, preferably by subtracting, in order to obtain a parameter deviation referring to the end of the degassing step. If the deviation referring to the end of the degassing step exceeds above a certain tolerance time, it is advisable that the system provides an alert signal to the user and/or a forecast of a deviating material property. It is in particular advisable that the actual value of the end of the degassing step is compared with the setpoint of the end of pot life.

It is very preferential that the at least one sensor is a temperature sensor at the mold for detecting the heat curing the molded part. It is possible that the plurality of sensors comprises a temperature sensor at the mold for detecting the heat curing the molded part. It is preferred that the temperature sensor is coupled with a/the time measuring device for detecting the curing time. It is advantageous that the mold is heated, wherein the temperature within the cavity of the mold - before the liquid polymer is poured into the cavity - is at least 40/50/60 °C. It is advisable that the temperature in the cavity - before the liquid polymer is poured into the cavity - is below 130/120/110 °C. The temperature sensor preferably detects a heat drop when the liquid polymer is poured into the cavity of the mold. According to a very advantageous embodiment, the system uses the temperature drop as a starting point for the curing step. It is very preferred that the system calculates a setpoint of an end of the curing step by adding the starting point of the curing step and the calculated curing time. The system preferably emits an alert signal to the user when the setpoint of the end of the curing time is reached. According to a preferred embodiment, the temperature sensor detects a drop in temperature when the mold is opened and the molded part is taken out. The system preferably uses this temperature drop for determining an actual value of an end of the curing step. It is in particular advisable that the system compares the setpoint of the end of the curing time with the actual value of the end of the curing time. It is advisable that the system emits an alert signal if the curing time is undercut below a certain tolerance time and preferably provides forecasted deviating material properties on the display.

According to a very advantageous embodiment, the calculated setpoint of a production parameter is a time span and/or a mixing ratio. It is preferred that the time span is pot life and/or stirring time and/or degassing time and/or curing time. It is highly advisable that the time span is presented as a countdown. According to a very preferred embodiment, the time span is triggered by parameter data from the sensor which indicate the time of a starting point of the according time span. Preferentially, the starting point of the time span and the time span itself are used to calculate the time of the end of the time span.

In order to achieve the above-mentioned object, the invention teaches a system for manual casting of polymers for production of molded parts as defined in claim 10.

It is preferred that the system comprises a pot which is constructed to be used manually/by hand of a user. Advantageously, the pot is made for casting liquid polymer into the mold. The pot preferentially comprises a spout for casting liquid polymer into the mold.

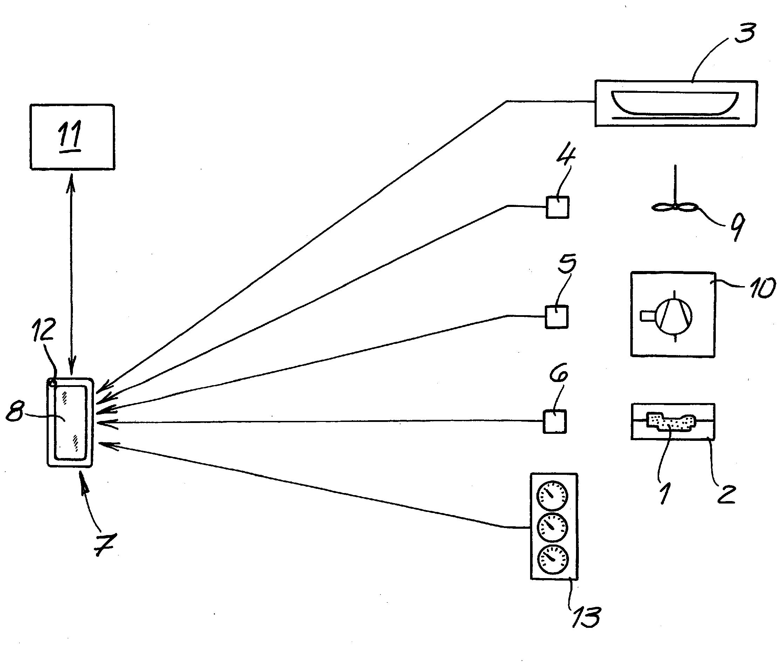

The invention is explained by means of one figure showing a preferred embodiment. The only figure illustrates a block diagram of the system for manual casting of polymers according to the invention.

The system comprises an electronic device 7 which might be a smartphone, a tablet or smartglasses. The electronic device 7 in this embodiment comprises a display 8 in form of a touchscreen, an identification sensor 12 in the form of a QR-scanner as well as an app. An important function of the app according to this embodiment is that the electronic device is connected in a bidirectional manner with a server 11. The server 11 according to this embodiment is remote to the electronic device 7 and might comprise a data base as well as a processing unit.

The electronic device 7 of this embodiment is allocated to a user working in a, for example, laboratory. The laboratory is equipped with an ambient sensor 13 providing ambient data and therefore preferably a humidity value, a temperature value and a pressure value. It is preferred that the ambient sensor 13 is wirelessly connected with the electronic device 7, wherein the app gathers the ambient data of the ambient sensor 13.

It is in particular within the scope of the invention that the electronic device 7 is connected with other sensors 3, 4, 5, 6 within the laboratory. The laboratory preferably comprises a weight sensor 3 in the form of a weighing scale providing weight data. A stirring sensor 4 is connected with a stirrer 9 and provides stirring data to the electronic device 7. The stirring sensor 4 according to this embodiment might be a wattmeter in an AC socket in which an AC power plug of the stirrer 9 is plugged. The stirring sensor 4 is therefore able to provide stirring power data related to a stirring time. A degassing apparatus 10 comprises an airtight container in which a pot can be placed. The degassing apparatus 10 is preferably equipped with a vacuum pump as well as with a degassing sensor 5 detecting the pressure within the container. Finally, a temperature sensor 6 is mounted on a mold 2, preferably in order to detect the temperature within a cavity of the mold 2. The mold 2 of this embodiment basically comprises two main parts which can be locked to and released from each other in order to pour a liquid polymer into and to take a molded part out of the mold 2. All these sensors 3, 4, 5, 6, 12, 13 provide parameter data to the electronic device 7 and therefore to the server 11. The server 11 thus knows which sensors 3, 4, 5, 6, 12, 13 are existent in the laboratory.

In order to produce a certain molded part 1, for example a roller, the user opens the app and chooses within a menu the type of roller he wants to produce. The different types of products and in particular the different types of rollers are stored within the database of the server 11 as a data set which is allocated to the mold 2 of the molded part 1 which the user wants to produce. This data set preferably comprises an identifier including a photo of the molded part and/or a name/number defining this molded part. Advantageously, this data set also comprises a volume value of the cavity of the mold. In this embodiment, the data set further comprises a recommendation regarding appropriate raw materials for the molded part. Here, the app recommends to use a first component comprising a prepolymer and a second component comprising a certain chain extender. The prepolymer may be produced by mixing a first and a second subcomponent, wherein the first subcomponent might be a certain organic diisocyanate and the second subcomponent might comprise a certain polyol. The molded part 1 is thus preferably made of three different raw materials. The recipe of this embodiment basically comprises the steps of mixing and stirring the first and second subcomponent to obtain the first component, of mixing and stirring the first and the second component to obtain a liquid polymer, of degassing the liquid polymer and of casting and curing the liquid polymer to obtain the molded part 1, made of a polyurethane elastomer.

According to this embodiment, the user now scans with the identification sensor 12 for identification of raw materials a QR-code of each package of all three raw materials. The app gathers the information of the QR-codes - in particular comprising an identifier of the manufacturer, an identifier of the products as well as a lot number - and sends the information to the server 11. The server 11 then preferably checks whether these raw materials are appropriate raw materials for the chosen product. It is very preferred that the server 11 then sends a confirmation that these raw materials are appropriate. The server 11 further calculates the recipe for production of the chosen product. In particular, the server 11 now calculates mixing ratios for the first and second subcomponent as well as for the first and second component. It is preferred that the server 11 further calculates setpoints of the parameters of pot life, stirring time and/or stirring power, degassing time and/or degassing pressure and curing time and/or curing temperature.

According to an early part of the recipe shown on the display 8, the user pours the first subcomponent comprising the organic diisocyanate into a pot which is placed on the weight sensor 3. It is preferred that the weight sensor 3 continuously sends weight data to the electronic device 7 which in turn forwards this weight data to the server 11. The server 11 then calculates a countdown concerning the weight of the first subcomponent which still has to be poured into the pot. This weight countdown is advantageously visualized on the display 8. It is preferred that the electronic device 7 emits an acoustic and visual alert signal if the calculated weight of the first subcomponent is reached within the pot.

The user in turn confirms within the app that he stopped pouring the first component into the pot and that he will now start pouring the second subcomponent into the pot. The user then pours the second subcomponent comprising the polyol into the pot. The server 11 calculates the weight of the second subcomponent which still has to be poured into the pot and provides a weight countdown on the display 8. This weight countdown in particular depends on a setpoint of a calculated mixing ratio which basically depends on the used raw materials.

However, this mixing ratio also might depend on other impacts. For example, a high humidity can vary the mixing ratio since isocyanate/the first subcomponent also reacts with water. Thus, the percentage of the first subcomponent should be higher if humidity is high. Furthermore, the room temperature can have an impact on curing of the liquid polymer. If, for example, the room temperature is high, this might result in an increased viscosity of the liquid polymer. This in turn can cause a smaller pot life since a viscous liquid has more problems to fill out the cavity of the mold 2 precisely.

According to this embodiment, weight data of the second subcomponent which is poured into the pot define a starting point of pot life since mixing of the first and second subcomponent triggers a chemical reaction between the first and second subcomponent. The time span of the pot life basically depends on the used raw materials as well as on the room temperature. The pot life can be calculated via a certain empirical formula or via a table look-up. The pot life in this example is three minutes and its countdown is visualized on the display 8. The electronic device 7 emits an acoustic and visual alert signal at the end of the pot life countdown. During this time, the user has to fulfil the following steps/substeps and in particular stirring of the first and second subcomponent to obtain the first component, mixing and stirring of the first and second component to obtain the liquid polymer and degassing and curing of the liquid polymer.

The user continues the production of the molded part 1 by stirring the first and second subcomponent with the stirrer 9. In this embodiment, the stirring sensor 4 not only provides an actual value of the stirring power in watt but also a maximum value of the stirring power. The server 11 is thus able to presume the maximum value of the stirring power and can therefore visualize a setpoint of stirring time at this maximum value of stirring power on the display 8 of the electronic device 7. The user thus has only to adjust the stirrer 9 to the maximum value of power and wait until the according stirring time has run down. In a second embodiment, the stirring sensor 4 continuously provides a stirring power in watt, wherein the server 11 continuously calculates the remaining stirring time until the recommended stirring energy is spent. According to another embodiment, the user reads a name plate including a power rating of the stirrer 9 and inserts the power rating into an according text box of the app which is the stirring sensor 4 of this embodiment. The server 11 calculates the stirring time based on the power rating which is then shown on the display 8. It is preferred that the user can manually start a countdown on the display 8 while simultaneously starting the stirrer 9.

After stirring the first and second subcomponent, the user obtains the first component. He then continues in that he weighs out, mixes and stirs the first and second component - like he did with the first and second subcomponent - in order to obtain the liquid polymer.

While the pot life countdown still continues, the user then puts the pot with the stirred liquid polymer into the degassing apparatus 10. The degassing sensor 5 detects a pressure drop after starting the vacuum pump and provides pressure data to the electronic device 7 which in turn provides the pressure data to the server 11. The server 11 calculates the remaining time for degassing which is again shown on the display 8 in form of a countdown. While the pressure drop is used as a starting point of the degassing time, the degassing time span is calculated based on the used raw materials as well as on ambient data, preferably humidity. It is preferred that the electronic device 7 emits an acoustic and visual signal to the user that degassing is finished. The user then stops the vacuum pump and takes the pot with the degassed liquid polymer out of the container of the degassing apparatus 10.

In a last step, the user brings the pot within the still running countdown of pot life to the mold 2 where he pours the degassed liquid polymer into the cavity of the mold 2. The mold 2 in this embodiment is preheated at a temperature of 80 °C. A temperature sensor 6 monitors the temperature within the cavity of the mold 2 and in particular detects that a colder liquid polymer causes a temperature drop within the cavity of the mold 2. This triggers a countdown which is shown on the display 8. This countdown refers to the curing time during which the liquid polymer solidifies and becomes a molded part 1. The curing time of this embodiment is four hours and based on a calculation including the used raw materials and ambient data, preferably room temperature.

It is advantageous that the user can confirm after each step/substep of the production that he has finished the according step/substep. The image on the display then changes and shows further details of the next step or substep. For example, the display shows the total amount of weight of the first component which has to be poured into the pot. It is also possible that certain recommendations are given within the recipe steps. An example may be that a span of stirring power is recommended.

It is preferred that the system recalculates the recipe. If, for example, the user makes a mistake and fills too much of a component/subcomponent into the pot, the system recalculates the recipe instantly and provides another setpoint of the weight amount of the other component/subcomponent in order to keep the same mixing ratio.

It also might happen that the user fills in too much of the second component. Since the countdown of the pot life is running, it might happen that the user has not enough time to unbox further raw material of the first component in order to keep the setpoint of the mixing ratio. However, the system of this embodiment shows the consequences of the deviation from the setpoint of mixing ratio on the display. The system thus forecasts the material properties of the molded part which will result. These material properties can be, for example, stress at yield, elongation at break or rebound resilience. The user hence knows what he has to expect from the molded part which will result and can therefore decide whether he wants to stop the production process or whether he wants to proceed.

It is preferred that the parameter data are stored within the server 11 and that the server 11 generates a report of the production process of the molded part. This report basically comprises prepared and concentrated parameter data which offer all the key information for a certain molded part. The report for example comprises the setpoints of mixing ratios and parameter deviations thereof. The report may also comprise the above-mentioned forecasts of material properties. It further may comprise several calculated countdown time spans as well the actual values of needed time for each production step/substep. This report provides much more transparency so that the manufacturer of the raw materials can provide more guarantees to the user if the user completes the whole production according to the recipe/setpoints.

## Claims

1. Method for manual casting of polymers, in particular of polyurethanes, wherein a molded part (1) is produced, wherein production of the molded part (1) comprises the following steps:
- providing a mold with a cavity for manual casting,
- preparing a liquid polymer according to a recipe,
- manual casting of the liquid polymer into the cavity of the mold (2),
- solidifying of the liquid polymer in the mold (2) resulting in the molded part (1),
wherein a system comprises the mold (2) and at least one sensor (3, 4, 5, 6, 12, 13), wherein the sensor (3, 4, 5, 6, 12, 13) detects a parameter before and/or during production of the molded part (1), wherein the sensor (3, 4, 5, 6, 12) provides parameter data of the parameter to the system, wherein the system uses the parameter data in order to calculate the recipe, wherein the recipe is calculated before and/or during the production of the molded part (1), wherein the recipe comprises at least one calculated setpoint of a production parameter, wherein the system comprises an electronic device (7) and a display (8), wherein the electronic device (7) controls the display (8), wherein the display (8) shows during the production of the molded part (1) at least a part of at least one production step of the recipe calculated according to the parameter data,
**characterized in that**
the at least one sensor is preferably an identification sensor (12) for identification of raw materials, a weight sensor (3) providing weight data, an ambient sensor (13) providing ambient data, a degassing sensor (5) for detecting degassing of the liquid polymer and/or a temperature sensor (6) at the mold (2) for detecting the heat curing the molded part (1), wherein the system adapts the recipe according to the detected parameter data and shows the adapted recipe on the display during the production of the molded part such that a user may implement the adapted recipe so as to react on certain production conditions and to eliminate production errors.

2. Method according to claim 1, wherein a first component is mixed with a second component resulting in the liquid polymer.

3. Method according to claims 1 or 2, wherein the molded part comprises polyurethane and/or polyurea and/or their respective raw materials.

4. Method according to one of the claims 1 to 3, wherein the system calculates a forecast of at least one material property of the molded part (1), wherein the forecast is preferably shown on the display (8).

5. Method according to one of the claims 1 to 4, wherein it can be confirmed manually to the system / electronic device (7) that a production step or a part of a production step is completed, whereupon at least a part of the display (8) content changes.

6. Method according to one of the claims 1 to 5, wherein the parameter data of the at least one sensor provides an actual value of the parameter, wherein the system generates a signal in case of a deviation of the actual value of the parameter from the setpoint of the parameter.

7. Method according to one of the claims 1 to 6, wherein the system saves the parameter data, wherein a report is generated comprising concentrated data of the saved parameter data.

8. Method according to one of the claims 1 to 7, wherein the system / the data base (11) / the electronic device (7) comprises a data set allocated to the mold (2).

9. Method according to one of the claims 1 to 8, wherein the calculated setpoint of a production parameter is a time span and/or a mixing ratio.

10. System for manual casting of polymers for production of molded parts (1), in particular of polyurethanes, in particular according to the method according to one of the claims 1 to 9, wherein the system comprises a mold (2) for production of a molded part (1) and at least one sensor (3, 4, 5, 6, 12, 13), wherein the sensor (3, 4, 5, 6, 12, 13) is capable of providing parameter data,
**characterized in that**
the at least one sensor is preferably an identification sensor (12) for identification of raw materials, a weight sensor (3) providing weight data, an ambient sensor (13) providing ambient data, a degassing sensor (5) for detecting degassing of the liquid polymer and/or a temperature sensor (6) at the mold (2) for detecting the heat curing the molded part (1), wherein the system comprises a calculated recipe for the production of the molded part (1), an electronic device (7) and a display (8), wherein the system is constructed to use the parameter data in order to calculate at least one setpoint of a production parameter of the recipe before or during the production, wherein the electronic device (7) is connected with the display (8) to control the display (8), wherein the system is constructed to show on the display (8) during the production of the molded part (1) at least a part of at least one production step of the calculated recipe, wherein the system is configured to adapt the recipe according to the detected parameter data and to show the adapted recipe on the display (8) during the production of the molded part (1) such that a user may implement the adapted recipe so as to react on certain production conditions and to eliminate production errors.

## Patentansprüche

1. Verfahren zum manuellen Gießen von Polymeren, insbesondere von Polyurethanen, wobei ein Formkörper (1) hergestellt wird, wobei die Herstellung des Formkörpers (1) die folgenden Schritte umfasst:
- Bereitstellen eines Formwerkzeugs mit einem Hohlraum zum manuellen Gießen,
- Herstellen eines flüssigen Polymers gemäß einer Rezeptur,
- manuelles Gießen des flüssigen Polymers in den Hohlraum des Formwerkzeugs (2),
- Erstarrenlassen des flüssigen Polymers in dem Formwerkzeug (2), um den Formkörper (1) zu erhalten,
wobei ein System das Formwerkzeug (2) und wenigstens einen Sensor (3, 4, 5, 6, 12, 13) umfasst, wobei der Sensor (3, 4, 5, 6, 12, 13) einen Parameter vor und/oder während der Herstellung des Formteils (1) erfasst, wobei der Sensor (3, 4, 5, 6, 12) Parameterdaten des Parameters an das System bereitstellt, wobei das System die Parameterdaten zum Berechnen der Rezeptur verwendet, wobei die Rezeptur vor und/oder während der Herstellung des Formkörpers (1) berechnet wird, wobei die Rezeptur wenigstens einen berechneten Sollwert eines Herstellungsparameters umfasst, wobei das System eine elektronische Vorrichtung (7) und eine Anzeige (8) umfasst, wobei die elektronische Vorrichtung (7) die Anzeige (8) steuert, wobei die Anzeige (8) während der Herstellung des Formkörpers (1) wenigstens einen Teil wenigstens eines Herstellungsschritts der gemäß den Parameterdaten berechneten Rezeptur anzeigt,
**dadurch gekennzeichnet, dass**
der wenigstens eine Sensor vorzugsweise ein Identifizierungssensor (12) zum Identifizieren von Ausgangsmaterialien, ein Gewichtssensor (3) zur Bereitstellung von Gewichtsdaten, ein Umgebungssensor (13) zur Bereitstellung von Umgebungsdaten, ein Entgasungssensor (5) zum Erfassen von Entgasung des flüssigen Polymers und/oder ein Temperatursensor (6) an dem Formwerkzeug (2) zum Erfassen der Wärme, die den Formkörper (1) härtet, ist, wobei das System die Rezeptur den erfassten Parameterdaten entsprechend anpasst und die angepasste Rezeptur während der Herstellung des Formkörpers auf der Anzeige anzeigt, so dass ein Anwender die angepasste Rezeptur umsetzen kann, um auf bestimmte Herstellungsbedingungen zu reagieren und um Herstellungsfehler zu beseitigen.

2. Verfahren gemäß Anspruch 1, wobei eine erste Komponente mit einer zweiten Komponente gemischt wird, um das flüssige Polymer zu ergeben.

3. Verfahren gemäß Ansprüchen 1 oder 2, wobei der Formkörper Polyurethan und/oder Polyharnstoff und/oder ihre entsprechenden Ausgangsmaterialien umfasst.

4. Verfahren gemäß einem der Ansprüche 1 bis 3, wobei das System eine Vorhersage wenigstens einer Materialeigenschaft des Formkörpers (1) berechnet, wobei die Vorhersage vorzugsweise auf der Anzeige (8) angezeigt wird.

5. Verfahren gemäß einem der Ansprüche 1 bis 4, wobei an das System/die elektronische Vorrichtung (7) manuell bestätigt werden kann, dass ein Herstellungsschritt oder ein Teil eines Herstellungsschritts abgeschlossen ist, worauf sich wenigstens ein Teil des Inhalts der Anzeige (8) verändert.

6. Verfahren gemäß einem der Ansprüche 1 bis 5, wobei die Parameterdaten des wenigstens einen Sensors einen Istwert des Parameters bereitstellen, wobei das System im Fall einer Abweichung des Istwerts des Parameters von dem Sollwert des Parameters ein Signal erzeugt.

7. Verfahren gemäß einem der Ansprüche 1 bis 6, wobei das System die Parameterdaten speichert, wobei ein Bericht erzeugt wird, der konzentrierte Daten der gespeicherten Parameterdaten umfasst.

8. Verfahren gemäß einem der Ansprüche 1 bis 7, wobei das System/die Datenbank (11)/die elektronische Vorrichtung (7) einen dem Formwerkzeug (2) zugeordneten Datensatz umfasst.

9. Verfahren gemäß einem der Ansprüche 1 bis 8, wobei der berechnete Sollwert eines Herstellungsparameters eine Zeitspanne und/oder ein Mischverhältnis ist.

10. System zum manuellen Gießen von Polymeren zur Herstellung von Formkörpern (1), insbesondere aus Polyurethanen, insbesondere gemäß dem Verfahren gemäß einem der Ansprüche 1 bis 9, wobei das System ein Formwerkzeug (2) zur Herstellung eines Formkörpers (1) und wenigstens einen Sensor (3, 4, 5, 6, 12, 13) umfasst, wobei der Sensor (3, 4, 5, 6, 12, 13) fähig ist, Parameterdaten bereitzustellen,
**dadurch gekennzeichnet, dass**
der wenigstens eine Sensor vorzugsweise ein Identifizierungssensor (12) zum Identifizieren von Ausgangsmaterialien, ein Gewichtssensor (3) zur Bereitstellung von Gewichtsdaten, ein Umgebungssensor (13) zur Bereitstellung von Umgebungsdaten, ein Entgasungssensor (5) zum Erfassen von Entgasung des flüssigen Polymers und/oder ein Temperatursensor (6) an dem Formwerkzeug (2) zum Erfassen der Wärme, die den Formkörper (1) härtet, ist, wobei das System eine berechnete Rezeptur für die Herstellung des Formkörpers (1), eine elektronische Vorrichtung (7) und eine Anzeige (8) umfasst, wobei das System dafür gestaltet ist, die Parameterdaten zum Berechnen wenigstens eines Sollwerts eines Herstellungsparameters der Rezeptur vor oder während der Herstellung zu nutzen, wobei die elektronische Vorrichtung (7) mit der Anzeige (8) verbunden ist, um die Anzeige (8) zu steuern, wobei das System dafür gestaltet ist, während der Herstellung des Formkörpers (1) wenigstens einen Teil wenigstens eines Herstellungsschritts der berechneten Rezeptur auf der Anzeige (8) anzuzeigen, wobei das System dazu konfiguriert ist, die Rezeptur den erfassten Parameterdaten entsprechend anzupassen und die angepasste Rezeptur während der Herstellung des Formkörpers (1) auf der Anzeige (8) anzuzeigen, so dass ein Anwender die angepasste Rezeptur umsetzen kann, um auf bestimmte Herstellungsbedingungen zu reagieren und um Herstellungsfehler zu beseitigen.

## Revendications

1. Procédé pour la coulée manuelle de polymères, en particulier de polyuréthanes, dans lequel une pièce moulée (1) est produite, dans lequel la production de la pièce moulée (1) comprend les étapes suivantes :
- obtention d'un moule avec une cavité pour une coulée manuelle,
- préparation d'un polymère liquide en fonction d'une recette,
- coulée manuelle du polymère liquide à l'intérieur de la cavité du moule (2),
- solidification du polymère liquide dans le moule (2), ce qui aboutit à la pièce moulée (1),
dans lequel un système comprend le moule (2) et au moins un capteur (3, 4, 5, 6, 12, 13), dans lequel le capteur (3, 4, 5, 6, 12, 13) détecte un paramètre avant et/ou pendant la production de la pièce moulée (1), dans lequel le capteur (3, 4, 5, 6, 12) fournit des données paramétriques du paramètre au système, dans lequel le système utilise les données paramétriques afin de calculer la recette, dans lequel la recette est calculée avant et/ou pendant la production de la pièce moulée (1), dans lequel la recette comprend au moins une consigne calculée d'un paramètre de production, dans lequel le système comprend un dispositif électronique (7) et un écran (8), dans lequel le dispositif électronique (7) contrôle l'écran (8), dans lequel l'écran (8) affiche pendant la production de la pièce moulée (1) au moins une partie d'au moins une étape de production de la recette calculée en fonction des données paramétriques,
**caractérisé en ce que**
l'au moins un capteur est de préférence un capteur d'identification (12) pour l'identification de matières premières, un capteur de poids (3) fournissant des données pondérales, un capteur ambiant (13) fournissant des données ambiantes, un capteur de dégazage (5) pour détecter le dégazage du polymère liquide et/ou un capteur de température (6) au niveau du moule (2) pour détecter le durcissement à chaud de la pièce moulée (1), dans lequel le système adapte la recette en fonction des données paramétriques détectées et affiche la recette adaptée sur l'écran pendant la production de la pièce moulée de telle sorte qu'un utilisateur peut mettre en œuvre la recette adaptée de manière à réagir sur certaines conditions de production et à éliminer des erreurs de production.

2. Procédé selon la revendication 1, dans lequel un premier composant est mélangé avec un deuxième composant, ce qui aboutit au polymère liquide.

3. Procédé selon la revendication 1 ou 2, dans lequel la pièce moulée comprend du polyuréthane et/ou de la polyurée et/ou leurs matières premières respectives.

4. Procédé selon une des revendications 1 à 3, dans lequel le système calcule une prévision d'au moins une propriété de la matière de la pièce moulée (1), dans lequel la prévision est de préférence affichée sur l'écran (8).

5. Procédé selon une des revendications 1 à 4, dans lequel il peut être confirmé manuellement au système / dispositif électronique (7) qu'une étape de production ou une partie d'une étape de production est achevée, moment auquel au moins une partie du contenu de l'écran (8) change.

6. Procédé selon une des revendications 1 à 5, dans lequel les données paramétriques de l'au moins un capteur fournissent une valeur réelle du paramètre, dans lequel le système génère un signal dans le cas d'un écart de la valeur réelle du paramètre par rapport à la consigne du paramètre.

7. Procédé selon une des revendications 1 à 6, dans lequel le système sauvegarde les données paramétriques, dans lequel un rapport comprenant des données concentrées des données paramétriques sauvegardées est généré.

8. Procédé selon une des revendications 1 à 7, dans lequel le système / la base de données (11) / le dispositif électronique (7) comprend un ensemble de données alloué au moule (2).

9. Procédé selon une des revendications 1 à 8, dans lequel la consigne calculée d'un paramètre de production est une durée et/ou un rapport de mélange.

10. Système pour la coulée manuelle de polymères pour la production de pièces moulées (1), en particulier de polyuréthanes, en particulier selon le procédé selon une des revendications 1 à 9, le système comprenant un moule (2) pour la production d'une pièce moulée (1) et au moins un capteur (3, 4, 5, 6, 12, 13), dans lequel le capteur (3, 4, 5, 6, 12, 13) est capable de fournir des données paramétriques,
**caractérisé en ce que**
l'au moins un capteur est de préférence un capteur d'identification (12) pour l'identification de matières premières, un capteur de poids (3) fournissant des données pondérales, un capteur ambiant (13) fournissant des données ambiantes, un capteur de dégazage (5) pour détecter le dégazage du polymère liquide et/ou un capteur de température (6) au niveau du moule (2) pour détecter le durcissement à chaud de la pièce moulée (1), le système comprenant une recette calculée pour la production de la pièce moulée (1), un dispositif électronique (7) et un écran (8), le système étant construit pour utiliser les données paramétriques afin de calculer au moins une consigne d'un paramètre de production de la recette avant ou pendant la production, dans lequel le dispositif électronique (7) est connecté à l'écran (8) pour contrôler l'écran (8), le système étant construit pour afficher sur l'écran (8) pendant la production de la pièce moulée (1) au moins une partie d'au moins une étape de production de la recette calculée, le système étant configuré pour adapter la recette en fonction des données paramétriques détectées et pour afficher la recette adaptée sur l'écran (8) pendant la production de la pièce moulée (1) de telle sorte qu'un utilisateur peut mettre en œuvre la recette adaptée de manière à réagir sur certaines conditions de production et à éliminer des erreurs de production.
